# EUROPÄISCHE PATENTSCHRIFT

(11) **EP 3 985 412 B1**
(45) Veröffentlichungstag und Bekanntmachung des Hinweises auf die Patenterteilung: **05.04.2023**
(21) Anmeldenummer: 21199411.6
(22) Anmeldetag: 28.09.2021
(51) Int. Cl.: G01S 7/4863, G01S 17/10, G01S 7/4865, G01S 17/42

(54) **DISTANZMESSUNG MIT EINEM LICHTLAUFZEITVERFAHREN**
DISTANCE MEASUREMENT USING A LIGHT PROPAGATION TIME METHOD
MESURE DE DISTANCE SELON UN PROCÉDÉ DE TEMPS DE PROPAGATION DE LA LUMIÈRE

(30) Priorität: 13.10.2020 DE 102020126799
(43) Veröffentlichungstag der Anmeldung: 20.04.2022
(73) Patentinhaber: SICK AG, 79183 Waldkirch (DE)
(72) Erfinder: Zwölfer, Ulrich, 79183 Waldkirch (DE); Albert, Michael, 77955 Ettenheim (DE); Kolb, Dr. Stephan, 79183 Waldkirch (DE)

(56) Entgegenhaltungen:
- EP-A1- 3 460 508
- DE-T5-112019 000 310

## Beschreibung

Die Erfindung betrifft einen optoelektronischen Sensor und ein Verfahren zur Distanzmessung eines Objekts in einem Erfassungsbereich mit einem Lichtlaufzeitverfahren nach dem Oberbegriff von Anspruch 1 beziehungsweise 8.

Distanzsensoren oder Entfernungstaster nach dem Lichtlaufzeitprinzip messen die Laufzeit eines Lichtsignals, die über die Lichtgeschwindigkeit der Entfernung entspricht. Man unterscheidet die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Um auch geringe Empfangsintensitäten nachweisen zu können, werden in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist, als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching).

Eine SPAD zählt somit wie ein Geigerzähler Einzelereignisse. SPADs sind nicht nur hochempfindlich, sondern auch vergleichsweise kostengünstig und effizient in Silizium-Halbleitern zu integrieren. Weiter lassen sie sich dann mit wenig Aufwand auf einer Leiterkarte integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal.

Ein auf SPADs basierender Distanzsensor arbeitet vorzugsweise pulsbasiert, um auch bei Kantentreffern oder Remissionssprüngen robuste Messungen zu gewährleisten. Das wird auch als direkte Time-of-Flight-Messung (dToF, direct Time of Flight) bezeichnet. Um trotz Störeinflüssen verlässliche Messergebnisse zu erhalten, können Ereignisse über mehrere SPADs beziehungsweise mehrere Sendepulse gesammelt und gemeinsam durch die Suche nach einem Maximum in einem Histogramm ausgewertet werden.

Für die praktische Implementierung dieser Lösung muss ein Histogrammspeicher vorgehalten werden. Dazu erzeugt ein Memorycompiler für eine gewisse Speichergröße wie 1024 x 10 Bit einen flächenoptimierten Funktionsblock und erweitert diesen vorzugsweise zur Testbarkeit um einen BIST (Built In Self Test). Damit ist das System auf ein Histogramm mit einer festen Auflösung von höchstens 1024 Bins fixiert.

Für einige Sensoren ist jedoch gewünscht, die Entfernung zu mehreren Punkten oder Messbereichen (ROI, region of interest) zu messen. Eine derartige Mehrsegmentauswertung lässt sich mit dem fixen Histogrammspeicher nur sequentiell verwirklichen. Alternativ müsste für die maximale Zahl möglicher Messbereiche mit deutlich erhöhtem Flächenverbrauch und erhöhten Chipkosten ein eigener Histogrammspeicher vorgehalten werden.

Prinzipiell wäre auch denkbar, den einen vorhandenen Histogrammspeicher unter Hinnahme von Einbußen bei der Auflösung für mehrere Messbereiche aufzuteilen und beispielsweise statt eines Histogramms mit 1024 Bins vier Histogramme mit 256 Bins zu verwenden. Vier derart partitionierte Histogrammspeicher samt Adressierlogik und dergleichen verbrauchen jedoch deutlich mehr Fläche als ein einheitlicher größerer Histogrammspeicher. Außerdem wäre die Partitionierung festgelegt, es können dann nur noch vier Histogramme geringerer Auflösung aufgezeichnet werden, aber nicht mehr ein Histogramm hoher Auflösung. Auch ein Zusammenführen von Speicherblöcken zu einem größeren Speicherblock benötigt Adressierlogik und verbraucht Fläche. Diese Überlegungen spielen vor allem bei Strukturen in Größenordnungen von 100 nm eine wichtige Rolle, und bei den üblichen Stückzahlen für Opto-ASICs und ähnliche in optoelektronischen Sensoren eingesetzte digitale Bausteine sind kleinere Strukturen kaum bezahlbar.

Die EP 2 475 957 B1 offenbart einen optischen Entfernungsmesser, der auf SPADs basiert. Dabei werden Gruppen von SPADs gebildet und damit jeweils Lichtlaufzeiten gemessen. Durch das Bilden von Gruppen soll die Lichtlaufzeitmessung auf die besondere Natur von SPADs reagieren, da störende Einzelereignisse über die Gruppe aufgefangen werden. Histogramme werden jedoch nicht gebildet, so dass sich das Problem der Speicherung mehrerer Histogramme gar nicht stellt.

Aus der EP 3 428 683 B1 ist ein weiterer optoelektronischer Sensor bekannt, der mit SPADs und einem dToF-Verfahren Entfernungen misst. Dabei ist eine Schaltermatrix vorgesehen, um gezielt bestimmte SPADs zur Auswertung auszuwählen und sie dafür eins-zu-eins mit TDCs (Time-to-Digital Converter) zu verbinden. Mit den derart ausgewählten SPADs wird ein einziges gemeinsames Histogramm gesammelt. In der EP 3 454 086 B1 wird eine solche Auswahl von SPADs genutzt, um mehrere Distanzwerte zu bestimmen und damit ein Positioniersystem auszurichten. Das Dokument erläutert die Auswahl der SPADs aus mehreren Messbereichen, nicht jedoch die konkrete Implementierung der dann erforderlichen Mehrfachauswertung, denn nicht einmal der Begriff Histogramm ist erwähnt.

Diese DE 11 2019 000 310 T5 offenbart eine Entfernungsmessungsvorrichtung gemäß dem ToF-(Laufzeit)-Verfahren mit einer Vielzahl von SPADs. Jeweils acht SPAD-Pixel sind zu einem Makro-Pixel zusammengefasst. Eine Histogramm-Verarbeitungseinheit kumuliert die Lawinenereignisse über eine Vielzahl von Abtastperioden in einem Histogramm. Dabei sind vier verschiedene Pixel-Modi vorgesehen, in denen die acht SPAD-Pixel eines Makro-Pixels einzeln, paarweise, in Vierergruppen oder insgesamt zusammengefasst sind. Im Falle einer Zusammenfassung werden die Ausgänge der betroffenen SPAD-Pixel addiert und deren Histogrammspeicher alternierend für zusätzliche Abtastperioden verwendet. Auf diese Weise werden ein Pixel-Modus mit höchster Auflösung und schmalstem Entfernungsmessbereich, ein Pixel-Modus mit niedrigster Auflösung und breitestem Entfernungsmessbereich sowie zwei Zwischenstufen realisiert. Eine weitere Entfernungsmesseinrichtung nach dem ToF-(Laufzeit)-Verfahren ist aus EP 3 460 508 A1 bekannt.

Es ist daher Aufgabe der Erfindung, mit einem gattungsgemäßen, auf einem direkten Lichtlaufzeitverfahren basierenden Sensor auf verbesserte Weise zusätzliche Messinformation zu erhalten.

Diese Aufgabe wird durch einen optoelektronischen Sensor und ein Verfahren zur Distanzmessung eines Objekts in einem Erfassungsbereich mit einem Lichtlaufzeitverfahren nach Anspruch 1 beziehungsweise 8 gelöst. Mit mindestens einem Lichtsender wird ein Lichtsignal ausgesandt und das aus dem Erfassungsbereich zurückkehrende Lichtsignal in einem Lichtempfänger registriert. Der Lichtempfänger weist eine erste Vielzahl von beispielsweise zu einer Matrix angeordneten Lichtempfangselementen oder Pixeln auf. Einzelne oder Gruppen der Lichtempfangselemente sind jeweils mit einer Lichtlaufzeitmesseinheit verbunden, welche eine Einzellichtlaufzeit des Lichtsignals des verbundenen Lichtempfangselements oder der verbundenen Lichtempfangselemente misst. Insgesamt gibt es eine zweite Vielzahl von Lichtlaufzeitmesseinheiten, die vorzugsweise kleiner ist als die erste Vielzahl der Lichtempfangselemente. Das bedeutet, dass nur ein Teil oder sogar nur ein kleiner Teil der Lichtempfangselemente in aktiven Messbereichen des Lichtempfängers ausgewählt ist. Die Einzellichtlaufzeiten werden in einem Speicher gesammelt, und eine Steuer- und Auswertungseinheit erzeugt aus den gesammelten Einzellichtlaufzeiten einen Distanzwert. Der Sensor bietet zumindest die Möglichkeit, mindestens zwei Distanzwerte aus den Einzellichtlaufzeiten mindestens zweier Gruppen von Lichtlaufzeitmesseinheiten zu bestimmen. Es gibt dann also je nach Anzahl der Gruppen mehrere Messbereiche (ROI, region of interest), für die gleichzeitig jeweils ein Distanzwert gemessen wird. In einigen Ausführungsformen ist der Sensor umschaltbar und bietet neben der simultanen Bestimmung mehrerer Distanzwerte auch einen Modus mit nur einer einzigen Gruppe, demnach einem einzigen Messbereich.

Die Erfindung geht von dem Grundgedanken aus, auch für eine Mehrfachauswertung mit mehreren Messbereichen und zugehörigem Gruppen von Lichtlaufzeitmesseinheiten denselben Speicher zum Sammeln der Einzellichtlaufzeiten zu verwenden. Es gibt also weiterhin nur einen einzigen physikalischen Speicher mit einheitlicher Adressierung über den gesamten Speicher, insbesondere nur einen einzigen von einem Memorycompiler erzeugten Funktionsblock. Eine Umadressiereinheit sorgt dafür, dass die Einzellichtlaufzeiten je nach die Einzellichtlaufzeit messender Lichtlaufzeitmesseinheit jeweils an eine Adresse in dem Speicher geschrieben wird, aus der sich die Zuordnung zu einer Gruppe rekonstruieren lässt. Die Zugehörigkeit zu einer Gruppe und damit einem Messbereich ist folglich in der Adresse codiert. Somit ist der Speicher zwar funktional partitioniert, denn über ihre Adresse der Inhalt einer Speicherzelle einer bestimmten Gruppe zugeordnet. In seiner physischen Implementierung handelt es sich aber weiterhin um einen einheitlichen und nicht partitionierten Speicher.

Die Erfindung hat den Vorteil, dass bei geringem Flächenverbrauch und damit geringen Herstellkosten auch mehrere Distanzwerte aus mehreren Messbereichen gewonnen werden können. Es ist nicht länger erforderlich, solche Mehrfachmessungen nacheinander durchzuführen, um mit nur einem Speicher auszukommen. Es ist also möglich, kurze Messzeiten und geringen Aufwand miteinander zu vereinbaren. Die Verarbeitung mehrerer Gruppen im selben Speicher bedeutet einen Auflösungsverlust, und es ist eine Frage der Anwendung, eine geeignete Wahl von mehreren Messbereichen und geeigneter Auflösung zu treffen.

Die Steuer- und Auswertungseinheit ist dafür ausgebildet, die Anzahl Gruppen zu verändern. Die Umadressiereinheit sorgt dafür, dass die Einzellichtlaufzeiten entsprechend der neuen Anzahl Gruppen an Adressen des Speichers abgelegt werden, aus der sich die neue Gruppenzugehörigkeit der Lichtlaufzeitmesseinheiten rekonstruieren lässt. Die Anzahl der Messbereiche kann damit an die Bedürfnisse einer Anwendung angepasst werden. Die Umstellung kann durch eine Konfiguration oder Programmierung erfolgen und ist sogar dynamisch während des Betriebs möglich. Wie bereits erwähnt, ist nicht ausgeschlossen, dass auf nur eine einzige Gruppe umgestellt wird. Denn durch die funktionale Aufteilung des einheitlichen Speichers auf mehrere Gruppen ergibt sich ein Auflösungsverlust, so dass es durchaus interessant sein kann, mit nur einer Gruppe bei höchstmöglicher Auflösung zu messen.

Der Sensor weist bevorzugt eine Auswahleinheit auf, die dafür ausgebildet ist, Lichtlaufzeiteinheiten variabel mit Lichtempfangselementen zu verbinden. Damit besteht nicht nur Flexibilität, wie sich die Lichtlaufzeiteinheiten auf Gruppen aufteilen, welche Pixel also zu jeweils einem Distanzmesswert zusammengefasst werden. Es wird auch auswählbar, welchem Pixel auf dem Lichtempfänger Lichtlaufzeiteinheiten zugeordnet sind, um somit die Lage der Messbereiche (ROIs) festzulegen oder zu verändern. In der Regel ist es sinnvoll, eine Nachbarschaft von Pixeln mit Lichtlaufzeiteinheiten derselben Gruppe zu verbinden. Im Prinzip ist die Zuordnung aber frei, eine Gruppe kann aus über den Lichtempfänger verteilten Pixeln bestehen. Sinnvoll kann es zum Beispiel sein, einen Messbereich mit einem Gitter aus nur jedem i-ten mit einer Lichtlaufzeitmesseinheit verbundenen Pixel zu überdecken, um so eine größere Fläche mit wenigen Lichtlaufzeitmesseinheiten abzutasten. Die Auswahleinheit ist besonders bevorzugt eine Schaltermatrix.

Der Speicher ist bevorzugt derart ausgebildet, dass darin eine diskrete Funktion in Speicherzellen mit aufeinanderfolgenden Adressen abgelegt werden kann und Einzellichtlaufzeiten in dieser Weise darin abgelegt und abgerufen werden, wobei insbesondere die Adressen der Speicherzellen dem Definitionsbereich entsprechen und in den Speicherzellen die zugehörigen Funktionswerte abgelegt sind. Mit anderen Worten ist der Speicher derart organisiert, dass die Adressen den X-Werten und der Inhalt der Speicherzellen den Y-Werten einer diskreten Funktion entsprechen. Selbstverständlich ist der Definitionsbereich in aller Regel gegenüber den Adressen verschoben und reskaliert: Adressen 0,1,... 15 entsprechen beispielsweise Zeitwerten 15ns, 30ns, ... 240ns durch Multiplizieren mit 15ns und Verschieben um +15ns. Ähnliches gilt für die Inhalte der Speicherzellen, sofern sie nicht als reine Zähler gebraucht werden.

Die Umadressiereinheit ist dafür ausgebildet, mindestens ein Adressbit einer Adresse für die Zuordnung zu einer Gruppe zu verwenden. Das mindestens eine umgewidmete Adressbit codiert nicht länger für einen X-Wert, sondern für die Gruppe beziehungsweise den Messbereich. Bei m derart umgewidmeten Adressbits wird der Speicher funktional in 2^{s} Teilspeicherbereiche unterteilt. Gleichzeitig reduziert sich die X-Auflösung um den Faktor 1/2^{s}. Bevorzugte Fälle sind s=1 mit zwei Teilspeicherbereichen bei halber Auflösung und s=2 mit vier Teilspeicherbereichen bei einem Viertel der Auflösung. Der Fall s=0 bleibt einstellbar, dann gibt es nur einen Messbereich bei höchster Auflösung. Erkennbar ist nur eine Anzahl von Messbereichen möglich, die einer Zweierpotenz entspricht. Es sind aber auch andere Anzahlen umsetzbar, indem Teilspeicherbereiche ungenutzt bleiben oder die Steuer-und Auswertungseinheit mehrere Teilspeicherbereiche zu einem Distanzmesswert zusammenfasst.

Das umgewidmete Adressbit ist bevorzugt das höchstwertige Bit (MSB, Most Significant Bit), beziehungsweise die umgewidmeten Adressbits sind bevorzugt die höchstwertigen Bits. Das hat den Vorteil, dass dann alle Einzellichtlaufzeiten ein und derselben Gruppe an aufeinanderfolgenden Adressen gespeichert sind. Bei Verwendung anderer Bits, die prinzipiell auch denkbar ist, würden die Informationen an voneinander separierte Adressen über den Speicher verteilt. Das macht dann die spätere Auswertung und Distanzwertberechnung umständlicher.

Der Speicher ist bevorzugt als Histogrammspeicher ausgebildet, und die Einzellichtlaufzeiten werden in mindestens einem Histogramm gesammelt. Ein Histogramm ist die Diskretisierung einer Häufigkeitsverteilung und ein Spezialfall einer in dem Speicher abgelegten Funktion und besonders geeignet, die Messeinformationen der Einzellichtlaufzeiten geeignet zusammenzufassen. Eine Adresse in dem Speicher entspricht einem Bin des Histogramms, wobei die Bins die Zeit diskretisieren, und der Inhalt der jeweiligen Speicherzelle dem Häufigkeitswert (Count). Im Falle mehrerer Gruppen werden mehrere Histogramme an den jeweils der Gruppe zugeordneten Adressen des Speichers gesammelt.

Der Histogrammspeicher weist bevorzugt so viele Speicherzellen auf wie Bins eines Histogramms für nur eine Gruppe. Der Speicher ist also gerade so groß ausgelegt, dass darin ein einziges Histogramm höchster Auflösung Platz findet. Eine kleine Anzahl ungenutzter Speicherzellen bleibt denkbar, etwa wenn 1.000 Bins gewünscht sind, aber 1.024 Bins leichter implementiert werden können. Für eine Messung mit mehreren Messbereichen werden stattdessen mehrere Histogramme mit entsprechender reduzierter Auflösung gespeichert, insbesondere 2^{s} Histogramme mit jeweils 1/2^{s} der Bins und damit der Zeitauflösung. Es sei erwähnt, dass es natürlich auch noch eine zweite Auflösung auf der anderen Achse gibt, die hier nicht gemeint ist, nämlich die Bittiefe der Speicherzellen, die den maximalen Häufigkeitswert oder Count vorgibt.

Die Umadressiereinheit ist dafür ausgebildet, in mindestens einem Bit der Adressen, insbesondere dem höchstwertigen Bit oder den höchstwertigen Bits, die Gruppe und in den übrigen Bits der Adressen ein Bin eines Histogramms zu codieren. Die Adressen werden dann also als zwei Teilblocks interpretiert, mit einem ersten Teilblock für die Zugehörigkeit zu einer Gruppe und einem zweiten Teilblock für das Bin. Hat eine Lichtlaufzeitmesseinheit eine Einzellichtlaufzeit bestimmt, so wird sie auf die Binbreite gerundet und damit einem Bin zugeordnet. Das lässt sich besonders einfach umsetzen, wenn Bits der gemessenen Einzellichtlaufzeit direkt als Adressbits des zweiten Teilblocks interpretiert werden. Je nach Gruppenanzahl hat die Umadressiereinheit dafür gesorgt, dass die untersten Bits der Einzellichtlaufzeit ignoriert werden; das ist der Auflösungsverlust, der für die mehreren simultan ausgewerteten Messbereiche hingenommen werden muss. Alternativ wird die Reichweite der Messung reduziert, die verringerte Binanzahl deckt dann nur noch einen kleineren Eindeutigkeitsbereich der Messung ab. Die Umadressiereinheit stellt außerdem sicher, dass in dem ersten Teilblock Adressbits gesetzt sind, die der Zuordnung der messenden Lichtlaufzeitmesseinheit zu der Gruppe entsprechen. An der resultierenden Adresse wird der Speicherinhalt um eins heraufgezählt.

Die Lichtempfangselemente weisen bevorzugt jeweils eine Lawinenphotodiode auf, die mit einer Vorspannung oberhalb einer Durchbruchspannung vorgespannt und somit in einem Geiger-Modus betrieben ist. Bei der Entfernungsmessung ist die hohe Empfindlichkeit und Dynamikkompression von Lawinenphotodiodenelementen im Geiger-Modus beziehungsweise SPADs besonders vorteilhaft. Die statistische Auswertung durch Sammeln von Einzellichtlaufzeiten insbesondere in einem Histogramm ist für SPADs und deren Eigenheiten besonders geeignet.

Die Lichtlaufzeitmesseinheiten weisen bevorzugt einen TDC (Time-to-Digital Converter) auf. Das ist ein bekanntes und relativ einfaches Bauteil, das mit hoher zeitlicher Auflösung Einzellichtlaufzeiten bestimmen kann. TDCs können direkt monolithisch in einem Kristall des Lichtempfängers integriert werden. Der TDC wird vorzugsweise zum Sendezeitpunkt gestartet und zum Empfangszeitpunkt durch den empfangenen Einzellichtpuls gestoppt. Andere Betriebsarten sind denkbar, etwa die TDCs jeweils mit dem Auslösen einer Lawine zu starten und dann zu einem bekannten Zeitpunkt anzuhalten, etwa dem Ende der Messperiode.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung eines optoelektronischen Sensors
- Fig. 2: eine Darstellung des allgemeinen Messablaufs;
- Fig. 3: eine Darstellung einer beispielhaften Zuordnung von Messbereichen (ROIs) zu Lichtlaufzeitmesseinheiten;
- Fig. 4: eine Darstellung einer beispielhaften Adressierung eines Histogrammspeichers, der für mehrere Messbereiche (ROIs) genutzt wird; und
- Fig. 5: eine Darstellung einer beispielhaften Verschaltung von Lichtlaufzeitmesseinheiten, Umadressiereinheit und Histogrammspeicher.

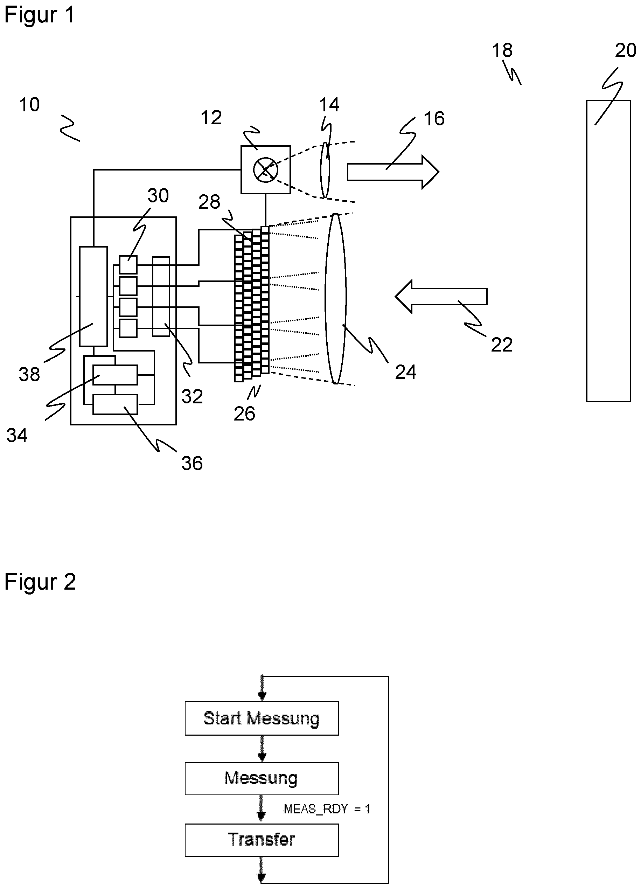

Figur 1 zeigt eine vereinfachte schematische Blockdarstellung eines optoelektronischen Sensors 10 zur Entfernungsmessung. Ein Lichtsender 12, beispielsweise eine LED oder eine Laserlichtquelle, sendet über eine Sendeoptik 14 ein Lichtsignal 16 in einen Erfassungsbereich 18 aus. Der Lichtsender 12 ist als externes Bauteil dargestellt, kann aber ebenso integrierter Bestandteil des Sensors 10 sein. Das ausgesandte Lichtsignal 16 weist bevorzugt einen Lichtpuls auf, der Sensor 10 misst dann Entfernungen nach dem Pulsverfahren beziehungsweise einem direkten Lichtlaufzeitverfahren (dToF, direct Time of Flight). Bevorzugt werden kurze Lichtpulse von wenigen 100 ps erzeugt.

Trifft das Lichtsignal 16 in dem Erfassungsbereich 18 auf ein Objekt 20, so kehrt ein remittiertes oder reflektiertes Lichtsignal 22 über eine Empfangsoptik 24 zu einem Lichtempfänger 26 zurück. Dieser Lichtempfänger 26 weist eine Vielzahl von Lichtempfangselementen auf, die vorzugsweise als Lawinenphotodiodenelemente 28 im Geiger-modus oder SPADs ausgebildet sind und die als Pixel aufgefasst werden können. SPADs liefern praktisch ein Digitalsignal und reagieren somit ausgesprochen schnell auf eintreffendes Licht.

Die Empfangssignale ausgewählter Lawinenphotodiodenelemente 28 werden von Lichtlaufzeitmesseinheiten 30 ausgelesen und ausgewertet. Dargestellt sind nur vier Lichtlaufzeitmesseinheiten 30, in der Praxis sind es meistens mehr, etwa in der Größenordnung von zehn, aber deutlich weniger als Lawinenphotodiodenelemente 28, von denen typischerweise hunderte, tausende oder noch deutlich mehr vorhanden sind. Die Lichtlaufzeitmesseinheiten 30, die insbesondere jeweils einen TDC (Time-to-Digital Converter) mit einer Zeitauflösung von beispielsweise 100 ps aufweisen, messen jeweils eine Lichtlaufzeit von Aussenden des Lichtsignals 16 bis zum Empfang des zurückkehrenden Lichtsignals 22. Es ist auch denkbar, es nicht bei einer einzigen Lichtlaufzeitbestimmung zu belassen, sondern die Lichtlaufzeit zu mehreren Empfangsereignissen zu bestimmen, insbesondere indem der TDC nach Zwischenspeichern der erfassten Lichtlaufzeit weiterläuft. Damit wird eine Mehrechofähigkeit erreicht, die beispielsweise für Messungen durch halbtransparente Objekte oder Glasscheiben, Messen bei Verunreinigungen durch Staub und dergleichen nützlich sein kann.

Eine Auswahleinheit 32 beispielsweise in Form einer Schaltermatrix ist zwischen dem Lichtempfänger 26 und den Lichtlaufzeitmesseinheiten 30 angeordnet. Mit Hilfe der Auswahleinheit 32 werden variabel bestimmte Lawinenphotodiodenelemente 28 oder Pixel mit jeweils einer Lichtlaufzeitmesseinheit 30 verbunden. Die Verbindung zwischen Lawinenphotodiodenelementen 28 und Lichtlaufzeitmesseinheiten 30 kann 1:1 oder n:1 sein. Durch die Auswahl werden aktive Pixel bestimmt, die zur Messung beitragen. Nicht ausgewählte Pixel, deren Signal ohnehin nicht ausgelesen würden, können beispielsweise durch Absenken der Vorspannung unter die Durchbruchspannung ausgeschaltet werden.

Die von Lichtlaufzeitmesseinheiten 30 bestimmten Einzellichtlaufzeiten werden in einem Speicher 34 gesammelt, vorzugsweise in Form von Histogrammen. Dabei sind die Lichtlaufzeitmesseinheiten 30 einer oder mehreren Gruppen zugeordnet, und jede Gruppe erzeugt ein eigenes Histogramm. Über diese Zuordnung in Gruppen bilden die mit den Lichtlaufzeitmesseinheiten 30 verbundenen Pixel mehrere Messbereiche (ROI, region of interest), mit denen gleichzeitig mehrere Entfernungswerte bestimmt werden können.

Ein Histogramm weist n Stützstellen oder Bins auf, die sich den Zeitmessbereich und damit die Reichweite des Sensors 10 oder einen ausgesuchten Teilbereich davon aufteilen, der dann den Eindeutigkeitsbereich der Messung bildet. Die Binanzahl entspricht vorzugsweise dem Zahlenbereich, die Binbreite der Zeitauflösung der Lichtlaufzeitmesseinheiten 30. In den Bins wird gezählt, wie oft eine dem Bin entsprechende Einzellichtlaufzeit gemessen wurde. Zu dieser Statistik tragen einerseits mehrere Lichtlaufzeitmesseinheiten 30 bei, die derselben Gruppe zugeordnet sind, und andererseits wiederholte Messungen. Der maximale Zählwert (Count) oder die maximale Histogrammhöhe ist durch die Bittiefe der Speicherzellen des Speichers 34 vorgegeben. Beispielsweise können 1.024 Speicherzellen mit einer Tiefe von 10 Bit vorgesehen sein.

Gibt es nur einen einzigen Messbereich (ROI), werden also sämtliche Einzellichtlaufzeiten aller Lichtlaufzeitmesseinheiten 30 in einem Histogramm gesammelt, so wird die maximale Zeitauflösung und kleinste Binbreite erreicht. Bei mehreren Messbereichen werden die vorhandenen Speicherzellen auf mehrere Histogramme verteilt, so dass sich die Binbreite erhöht und damit die Zeitauflösung reduziert, oder der Eindeutigkeitsbereich der Messungen wird verkleinert. Die Aufteilung des Speichers 34 für mehrere Histogramme durch intelligente Adressierung wird weiter unten unter Bezugnahme auf die Figuren 2 bis 5 näher erläutert.

Unabhängig davon, ob in dem Speicher 34 ein einziges Histogramm oder mehrere Histogramme gesammelt werden, handelt es sich jeweils um denselben, einzigen und einheitlichen Speicher mit einem einzigen Adressbereich beziehungsweise denselben Funktionsblock, der beispielsweise von einem Memorycompiler erzeugt ist. Es gibt keine physische Partitionierung mit zugehöriger Speicherlogik. Vielmehr sorgt eine Umadressiereinheit 36 in einer ebenfalls noch zu erläuternden Weise dafür, dass die Lichtlaufzeitmesseinheiten 30 ihre Einzellichtlaufzeiten an Adressen des einzigen Speichers 34 ablegen, aus denen sich die Zugehörigkeit der jeweiligen Lichtlaufzeitmesseinheit 30 zu einer Gruppe und damit einem Messbereich rekonstruieren lässt.

Eine Steuer- und Auswertungseinheit 38 verarbeitet die Histogramme und sucht darin beispielsweise einen von dem remittierten Lichtsignal 22 verursachten Peak. Die zu dem Peak gehörige Lichtlaufzeit entspricht nach Umrechnung über die Lichtgeschwindigkeit in übliche Einheiten dem gesuchten Entfernungswert. Die Steuer-und Auswertungseinheit 38 kann auch für die übrigen Steuerungsaufgaben in dem Sensor 10 zuständig und dafür mit dessen weiteren Komponenten verbunden sein.

Zumindest einige oder Teile der Lichtlaufzeitmesseinheiten 30, der Auswahleinheit 32, des Speichers 34, der Umadressiereinheit 36 und/oder der Steuer- und Auswertungseinheit 38 können auch mit den Lawinenphotodiodenelementen 28 auf einem gemeinsamen Chip integriert werden (z.B. ASIC, Application-Specific Integrated Circuit). Denkbar ist auch, beispielsweise die Steuer-und Auswertungseinheit 38 auf einem zusätzlichen Baustein unterzubringen, beispielsweise einen Mikroprozessor, oder die Umadressiereinheit 36 in der Steuer- und Auswertungseinheit 38 zu implementieren.

Die Anordnung des Sensors 10 in Figur 1 ist rein beispielhaft zu verstehen. Es sind alternativ andere bekannte optische Lösungen einsetzbar, wie Autokollimation etwa mit einem Strahlteiler und einer gemeinsamen Optik oder die Anordnung des Lichtsenders 12 vor dem Lichtempfänger 26. Auch komplexere Sensoren wie Lichtgitter oder Laserscanner sind denkbar.

Figur 2 illustriert einen möglichen allgemeinen Ablauf der Messung. Nach dem Start der Messung wird innerhalb der eigentlichen Messung das Lichtsignal 16 ausgesandt und wieder empfangen, und die Lichtlaufzeitmesseinheiten 30 bestimmen Einzellichtlaufzeiten anhand der Signale aus den verbundenen Lawinenphotodiodenelementen 28. Sobald die Messung beendet ist, wird ein Flag MEAS_RDY gesetzt, und die k Einzellichtlaufzeiten können in den Speicher 34 übertragen werden. Vorzugsweise wiederholt sich dieser Ablauf dann noch I-mal, beispielsweise 1.000 mal, um durch Messwiederholungen eine bessere statistische Datenbasis zu erzeugen.

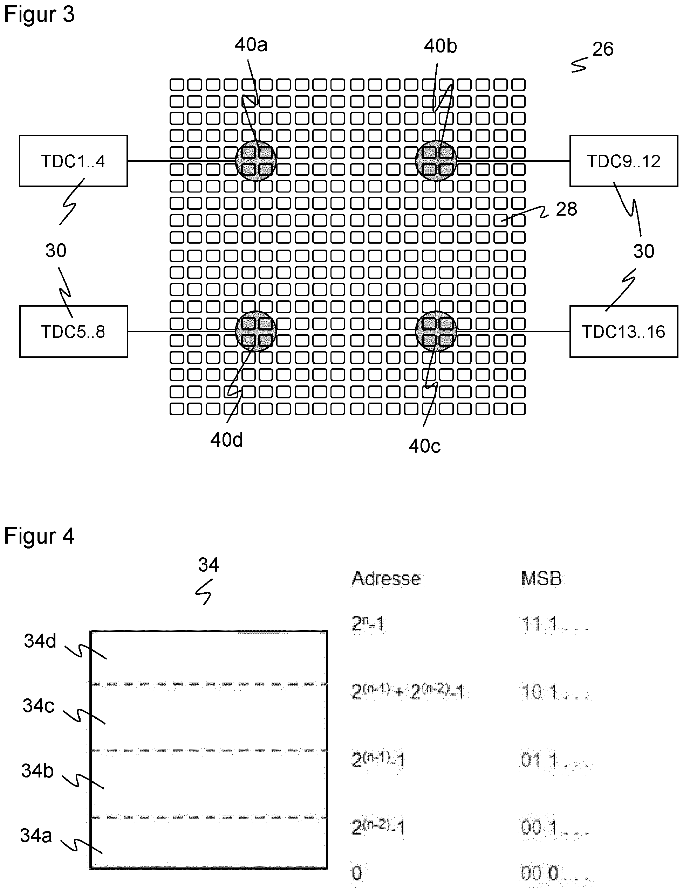

Figur 3 zeigt eine beispielhafte Zuordnung von Messbereichen 40a-d (ROIs) zu Lichtlaufzeitmesseinheiten 30. Hier sind beispielhaft vier Messbereiche 40a-d vorgesehen, was als eine Unterteilung des Lichtempfängers 26 in Quadranten verstanden werden kann. Jeder der Messbereiche 40a-d soll simultan einen eigenen Entfernungswert liefern und ist dazu mit einer anderen Gruppe von Lichtlaufzeitmesseinheiten 30 verbunden. In dem Beispiel gibt es insgesamt sechzehn Lichtlaufzeitmesseinheiten 30 hier in Form von TDCs, und es ist ein erster Messbereich 40a mit den TDCs1...4, ein zweiter Messbereich 40b mit den TDCs5..8, ein dritter Messbereich 40c mit den TDCs9-12 und ein vierter Messbereich 40d mit den TDCs13-16 verbunden. Zu beachten ist, dass zwei Arten von Zuordnungen unterschieden werden. Einerseits sind bestimmte Pixel oder Lawinenphotodiodenelemente 28 mittels der Auswahleinheit 32 hier 1:1, alternativ auch n:1 mit bestimmten Lichtlaufzeitmesseinheiten 30 verbunden. Andererseits bilden Lichtlaufzeitmesseinheiten 30 Gruppen entsprechend den Messbereichen 40a-d.

Figur 4 zeigt den Speicher 34, der entsprechend den vier Messbereichen 40a-d oder Quadranten unterteilt ist und vier Histogramme speichert. Es sei daran erinnert, dass der Speicher 34 physikalisch ein einziger, nicht partitionierter Speicher ist, der insbesondere wie ein übliches RAM aufgebaut ist und adressiert wird. Folglich gibt es Speicherzellen mit Adressen 0... 2ⁿ-1, an denen jeweils ein Wert abgelegt werden kann. Bei einem Histogramm wird dieser Wert als Zähler genutzt.

Um nun mehrere Histogramme in dem Speicher abzulegen, werden mehrere Adressbereiche unterschieden, im Beispiel vier Adressbereiche 34a-d entsprechend den vier Messbereichen 40a-d. Die Umadressiereinheit 36 sorgt dafür, dass Einzellichtlaufzeiten je nach erzeugender Lichtlaufzeitmesseinheit 30 in dem richtigen Adressbereich 34a-d abgelegt wird.

Eine entsprechende Adresscodierung ist auf der rechten Seite der Figur 4 gezeigt. Einige Adressbits, in diesem Fall die beiden höchstwertigen Adressbits (MSB, Most Significant Bit), werden umgewidmet und codieren nicht mehr für ein Bin, sondern für die Gruppe. Diese Adressbits und Speicherzellen fehlen dann dem einzelnen Histogramm, das dementsprechend an Zeitauflösung verliert.

Konkret sind mit Rückgriff auf das Beispiel der Figur 3 sechzehn TDCs verwendet und auf vier mit ROI1...4 bezeichnete Messbereiche 40a-d verschaltet. Die Codierung dazu ist wie in Figur 4 gezeigt beispielsweise:

| | | |
|---|---|---|
| ROI1: | TDC1...4 | codiert mit MSB 00 |
| ROI2: | TDC 5...8 | codiert mit MSB 01 |
| ROI3: | TDC 9...12 | codiert mit MSB 10 |
| ROI4: | TDC 13...16 | codiert mit MSB 11 |

Im Messablauf der Figur 3 erfolgt das Schreiben der Einzellichtlaufzeiten, sobald nach dem Aussenden eines Lichtsignals 16 und einer Messzeit von beispielsweise 100ns für eine Reichweite von etwa 15m das Flag MEAS_RDY = 1 gesetzt ist. Die Einzellichtlaufzeiten werden dann nacheinander von den TDCs1..16 in den Speicher 34 geschrieben, d.h. das jeweils durch die gemessene Einzellichtlaufzeit bestimmte Bin wird heraufgesetzt. Die richtige MSB-Adressierung und damit Auswahl der passenden Adressbereiche 34a-d übernimmt beispielsweise ein Zustandsautomat der Umadressiereinheit 36.

Durch diese Form der Histogramm-Partitionierung bietet der Sensor 10 die Option, mehrere Histogramme aus mehreren Messbereichen 40a-d zu sammeln und somit gleichzeitig mehrere Distanzwerte zu messen. Die Anzahl der Messbereiche 40a-d kann verändert werden, sei es durch anfängliche Konfiguration oder auch dynamisch noch während des Betriebs, indem mehr oder weniger Adressbits umgewidmet werden. Eine jeweilige Verdopplung der Anzahl von Messbereichen 40a-d bringt eine Halbierung der Zeitauflösung oder alternativ des Eindeutigkeitsbereichs beziehungsweise der Reichweite der Messung mit sich. Der einheitliche und physisch einzige Speicher 34 bleibt dabei erhalten.

Eine Verringerung der Reichweite, wenn der reduzierte Adressbereich 34a-d auf diese Weise ausgeglichen wird, hat im Übrigen nicht nur Nachteile, weil sich damit auch die Messzeiten verkürzen und der Sensor 10 damit eine verbesserte Ansprechzeit hat. Beispielsweise wird über eine Reichweite von 15 m mit einem Messbereich, eine Reichweite von 7,5 m mit zwei Messbereichen und eine Reichweite von 3,8 m mit vier Messbereichen gemessen. Zugleich reduziert sich die Messzeit von 100 ns auf 50 ns beziehungsweise 25 ns. Dies bietet komfortable Flexibilität für unterschiedlichste Anwendungen. Kurze Ansprechzeiten sind beispielsweise für eine Vier-Quadranten-Aufzeichnung in der Bewegungserkennung und Erzeugung von Motionvektoren von Vorteil.

Steht beispielsweise in dem Speicher 34 eine Gesamtzahl von 1.024 Speicherzellen zur Verfügung, und sind weiterhin sechzehn TDCs vorhanden, um im Beispiel zu bleiben, so kann dies genutzt werden, um
1 ROI mit 1 X16 TDCs auf 1024 x 10 Bit,
2 ROls mit 2 x 8 TDCs auf 2 x 512 x 10 Bit oder
4 ROls mit 4 x 4 TDCs auf 4 x 256 x 10 Bit zu schreiben.

Werden mehr als nur die beiden höchsten Adressbits umgewidmet, so sind auch noch mehr Histogramme und damit Messbereiche möglich.

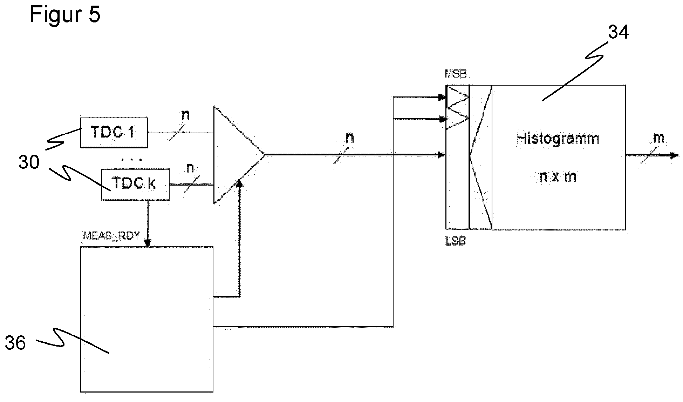

Figur 5 zeigt eine beispielhafte Architektur für die Lichtlaufzeitmesseinheiten 30, die Umadressiereinheit 36 und den Speicher 34. In einer bevorzugten Implementierung entspricht der Zeitbereich der TDCs gerade der Histogrammweite. Misst also ein TDC mit 10 Bit, so steht auch ein Histogrammspeicher mit einem Adressbereich von 10 Bit zur Verfügung. Das Messergebnis des TDC kann dann direkt als Adresse in dem Speicher 34 verwendet werden und dort das passende Bin inkrementieren. Dies beschreibt die Situation, wenn nur ein Histogramm aufgezeichnet werden soll.

Im Falle mehrerer Histogramme stehen für ein einzelnes Histogramm nicht mehr alle Bins zur Verfügung, das MSB oder die MSBs sind umgewidmet und codieren die Zugehörigkeit zu einer Gruppe beziehungsweise einem Messbereich (ROI). Die umgewidmeten Bits setzt die Umadressiereinheit 36 aus der Identität des jeweiligen TDCs, der die Einzellichtlaufzeit gemessen hat, und beispielsweise einer internen Zuordnungstabelle von TDCs zu Histogrammen und damit Messbereichen 40a-d zu Adressbereichen 34a-d.

Wird der geringere pro Histogramm verfügbare Speicherplatz durch eine Reduktion der Reichweite ausgeglichen, so sind die MSBs der TDCs ohnehin frei geworden, da nur noch kürzere Einzellichtlaufzeiten gemessen werden, die der TDC ohne die MSBs darstellt. Originär liefert also ein TDC ohnehin nur den Wert Null in den MSBs, und die Umadressiereinheit 36 kann stattdessen den MSB-Code für den passenden Messbereich ersetzen.

Alternativ kann die Reichweite erhalten bleiben und die Zeitauflösung reduziert werden. Damit werden nun effektiv von den TDCs die untersten Bits (LSB, Least Significan Bit) weggelassen, die den feinsten Teil der Zeitmessung beitragen. Die Umadressiereinheit 36 schiebt das Bitmuster, mit dem ein TDC die gemessene Einzellichtlaufzeit repräsentiert, um eine der Anzahl 2^{s} von Histogrammen entsprechende Zahl s von Bits nach rechts, so dass die LSBs herausfallen und die MSBs freiwerden, die dann durch den MSB-Code für den passenden Messbereich ersetzt werden. Die Steuer- und Auswertungseinheit muss dann natürlich mit einer 2^{s}-fachen Binbreite rechnen, das ist wiederum der Zeitauflösungsverlust. Eine Reduktion von Reichweite und Zeitauflösung kann auch kombiniert und so auf die beiden Größen aufgeteilt werden.

Die konkrete Umsetzung, mit der die LSBs unberücksichtigt bleiben beziehungsweise die Reichweite reduziert wird, ist auf vielfältige Art und Weise denkbar. In einem Beispiel messen die TDCs mit 12 Bit den Wert TDC_DATA[1 1:0] bei einer Grundgenauigkeit 50 ps und adressieren im Histogramm 10 Bit. Dann wird wahlweise TDC_DATA[9:0] abgegriffen, um die höchste Zeitauflösung von 50 ps tatsächlich zu realisieren, das dann aber nur über einen Entfernungsbereich von 7,5 m, oder über Abgriff von TDC_DATA[10:1] oder TDC_DATA[1 1:2] wird der Entfernungsbereich verdoppelt oder vervierfacht und entsprechend die Zeitauflösung halbiert oder geviertelt. Ein entsprechender Datenabgriff lässt sich auch nutzen, um Entfernungsbereiche auszuwählen. Beispielsweise wird TDC_DATA[0:9] in höchster Auflösung abgegriffen, und die beiden MSBs TDC_DA T A[11: 1 0] werden für eine Zuordnung in einen Entfernungsbereich genutzt, beispielsweise in dieser Form:
TDC_DATA[11:10] = b'00 ==> 0 ... 7,5 m,
TDC_DATA[11:10] = b'01 ==> 7,7 ... 15 m,
TDC_DATA[11:10] = b'10 ==> 15 ... 22,5 m,
TDC_DATA[11:10] = b'11 ==> 22,5 ... 30 m.

## Patentansprüche

1. Optoelektronischer Sensor (10) zur Distanzmessung eines Objekts (20) in einem Erfassungsbereich (18) mit einem Lichtlaufzeitverfahren, wobei der Sensor (10) einen Lichtsender (12) zum Aussenden eines Lichtsignals (16) in den Erfassungsbereich (18), einen Lichtempfänger (26) mit einer ersten Vielzahl von Lichtempfangselementen (28) zur Erfassung von Empfangslicht (22) aus dem Erfassungsbereich (18), eine zweite Vielzahl von Lichtlaufzeitmesseinheiten (30) zur Bestimmung jeweiliger Einzellichtlaufzeiten aus einer Lichtlaufzeit zwischen Aussenden des Lichtsignals (16) und Empfangen des an dem Objekt (20) remittierten oder reflektierten Lichtsignals (22), einen als Histogrammspeicher ausgebildeten Speicher (34) zum Sammeln von Einzellichtlaufzeiten in mindestens einem Histogramm sowie eine Steuer- und Auswertungseinheit (38) aufweist, die dafür ausgebildet ist, durch Auswertung der gesammelten Einzellichtlaufzeiten einen Distanzwert zu bestimmen, wobei auch mindestens zwei Distanzwerte aus den Einzellichtlaufzeiten mindestens zweier Gruppen von Lichtlaufzeitmesseinheiten (30) bestimmt werden können,
**dadurch gekennzeichnet,**
**dass** der Speicher (34) ein einziger nicht partitionierter Speicher mit einheitlicher Adressierung über den gesamten Speicher (34) ist und dass der Sensor (10) eine Umadressiereinheit (36) aufweist, die dafür ausgebildet ist, in mindestens einem Adressbit einer Adresse die Gruppe und in den übrigen Adressbits ein Bin eines Histogramm zu codieren, somit Adressen als zwei Teilblocks zu interpretieren, mit einem ersten Teilblock für die Zugehörigkeit zu einer Gruppe und einem zweiten Teilblock für ein Bin, um auf diese Weise Einzellichtlaufzeiten je nach Zuordnung einer Lichtlaufzeitmesseinheit (30) zu einer Gruppe an bestimmte Adressen (34a-d) desselben einheitlichen Speichers (34) zu schreiben, so dass die Steuer- und Auswertungseinheit (38) die gespeicherten Einzellichtlaufzeiten über die Adresse einer Gruppe und damit einem Distanzwert zuordnen kann, wobei die Steuer- und Auswertungseinheit (38) dafür ausgebildet ist, die Anzahl Gruppen zu verändern, und wobei die Umadressiereinheit (36) dafür sorgt, dass die Einzellichtlaufzeiten entsprechend der neuen Anzahl Gruppen an Adressen des Speichers (34) abgelegt werden, aus der sich die neue Gruppenzugehörigkeit der Lichtlaufzeitmesseinheiten (30) rekonstruieren lässt.

2. Sensor (10) nach Anspruch 1,
der eine Auswahleinheit (32) aufweist, die dafür ausgebildet ist, Lichtlaufzeiteinheiten (30) variabel mit Lichtempfangselementen (28) zu verbinden.

3. Sensor (10) nach einem der vorhergehenden Ansprüche,
wobei der Speicher (34) derart ausgebildet ist, dass darin eine diskrete Funktion in Speicherzellen mit aufeinanderfolgenden Adressen abgelegt werden kann und Einzellichtlaufzeiten in dieser Weise darin abgelegt und abgerufen werden,
wobei insbesondere die Adressen der Speicherzellen dem Definitionsbereich entsprechen und in den Speicherzellen die zugehörigen Funktionswerte abgelegt sind.

4. Sensor (10) nach einem der vorhergehenden Ansprüche,
wobei das Adressbit das höchstwertige Bit ist oder die Adressbits die höchstwertigen Bits sind.

5. Sensor (10) nach einem der vorhergehenden Ansprüche,
wobei der Histogrammspeicher so viele Speicherzellen aufweist wie Bins eines Histogramms für nur eine Gruppe.

6. Sensor (10) nach einem der vorhergehenden Ansprüche,
wobei die Umadressiereinheit (36) dafür ausgebildet ist, in dem höchstwertigen Bit oder den höchstwertigen Bits die Gruppe und in den übrigen Bits der Adressen ein Bin eines Histogramms zu codieren.

7. Sensor (10) nach einem der vorhergehenden Ansprüche,
wobei die Lichtempfangselemente (28) jeweils eine Lawinenphotodiode aufweisen, die mit einer Vorspannung oberhalb einer Durchbruchspannung vorgespannt und somit in einem Geiger-Modus betrieben ist und/oder wobei die Lichtlaufzeitmesseinheiten (30) einen TDC aufweisen.

8. Verfahren zur Distanzmessung eines Objekts (20) in einem Erfassungsbereich (18) mit einem Lichtlaufzeitverfahren, bei dem ein Lichtsignal in den Erfassungsbereich (18) ausgesandt und das in dem Erfassungsbereich (18) reflektierte oder remittierte Lichtsignal (22) von einem Lichtempfänger (26) mit einer ersten Vielzahl von Lichtempfangselementen (28) erfasst wird, wobei mit einer zweiten Vielzahl von Lichtlaufzeitmesseinheiten (30) jeweilige Einzellichtlaufzeiten aus einer Lichtlaufzeit zwischen Aussenden des Lichtsignals (16) und Empfangen des an dem Objekt (20) remittierten oder reflektierten Lichtsignals (22) gemessen und in einem als Histogrammspeicher ausgebildeten Speicher (34) in mindestens einem Histogramm gesammelt werden und mindestens zwei Distanzwerte aus den Einzellichtlaufzeiten mindestens zweier Gruppen von Lichtlaufzeitmesseinheiten (30) bestimmt werden,
**dadurch gekennzeichnet,**
**dass** der Speicher (34) ein einziger nicht partitionierter Speicher mit einheitlicher Adressierung über den gesamten Speicher (34) ist, dass von einer Umadressiereinheit (36) Einzellichtlaufzeiten je nach Zuordnung einer Lichtlaufzeitmesseinheit (30) zu einer Gruppe an bestimmte Adressen (34a-d) desselben einheitlichen Speichers (34) geschrieben werden, wobei in mindestens einem Adressbit einer Adresse die Gruppe und in den übrigen Adressbits ein Bin eines Histogramm codiert wird, somit Adressen als zwei Teilblocks interpretiert, werden, mit einem ersten Teilblock für die Zugehörigkeit zu einer Gruppe und einem zweiten Teilblock für ein Bin, und dass bei der Bestimmung von Distanzwerten die gespeicherten Einzellichtlaufzeiten über die Adresse einer Gruppe und damit einem Distanzwert zugeordnet werden, wobei die Anzahl Gruppen zur Anpassung an die Bedürfnisse einer Anwendung verändert wird, und wobei die Umadressiereinheit (36) dafür sorgt, dass die Einzellichtlaufzeiten entsprechend der neuen Anzahl Gruppen an Adressen des Speichers (34) abgelegt werden, aus der sich die neue Gruppenzugehörigkeit der Lichtlaufzeitmesseinheiten (30) rekonstruieren lässt.

## Claims

1. An optoelectronic sensor (10) for measuring the distance of an object (20) in a detection area (18) using a light time of flight method, the sensor (10) comprising a light transmitter (12) for transmitting a light signal (16) into the detection area (18), a light receiver (26) having a first plurality of light receiving elements (28) for detecting received light (22) from the detection area (18), a second plurality of light time of flight measuring units (30) for determining respective individual light times of flight from a light time of flight between transmission of the light signal (16) and reception of the light signal (22) remitted or reflected at the object (20), a memory (34) configured as a histogram memory for collecting individual light times of flight in at least one histogram, and a control and evaluation unit (38) configured to determine a distance value by evaluating the collected individual light times of flight, wherein it is also possible to determine at least two distance values from the individual light times of flight of at least two groups of light time of flight measuring units (30),
**characterized in that** the memory (34) is a single non-partitioned memory with uniform addressing over the entire memory (34), and **in that** the sensor (10) comprises a readdressing unit (36) configured to encode the group in at least one address bit of an address and a bin of a histogram in the remaining address bits, thus interpreting addresses as two sub-blocks, with a first sub-block for association with a group and a second sub-block for a bin, so that individual light times of flight are stored, depending on the assignment of a light time of flight measuring unit (30) to a group, at specific addresses (34a-d) of the same uniform memory (34) and so that the control and evaluation unit (38) can assign the stored individual light times of flight to a group and thus to a distance value by means of the address, the control and evaluation unit (38) being configured to change the number of groups, and wherein the readdressing unit (36) ensures that the individual light times of flight are stored at addresses of the memory (34) in accordance with the new number of groups, from which the new group assignment of the light time of flight measuring units (30) can be reconstructed.

2. The sensor (10) according to claim 1,
comprising a selection unit (32) configured to variably connect light time of flight measuring units (30) to light receiving elements (28).

3. The sensor (10) according to any of the preceding claims,
wherein the memory (34) is configured so that a discrete function can be stored therein in memory cells with successive addresses and individual light times of flight are stored therein and retrieved in this way, wherein in particular the addresses of the memory cells correspond to the definition range and the associated function values are stored in the memory cells.

4. The sensor (10) according to any of the preceding claims,
wherein the address bit is the most significant bit or the address bits are the most significant bits.

5. The sensor (10) according to any of the preceding claims,
wherein the histogram memory comprises as many memory cells as bins of a histogram for only one group.

6. The sensor (10) according to any of the preceding claims,
wherein the readdressing unit (36) is configured to encode the group in the most significant bit or bits and a bin of a histogram in the remaining bits of the addresses.

7. The sensor (10) according to any of the preceding claims,
wherein the light receiving elements (28) each comprise an avalanche photodiode biased with a bias voltage above a breakdown voltage and thus operated in a Geiger mode and/or wherein the light time of flight measuring units (30) comprise a TDC.

8. A method for distance measurement of an object (20) in a detection area (18) using a light time of flight method, wherein a light signal is transmitted into the detection area (18) and the light signal (22) reflected or remitted in the detection area (18) is detected by a light receiver (26) having a first plurality of light receiving elements (28), wherein respective individual light times of flight are measured using a second plurality of light time of flight measuring units (30) from a light time of flight between transmission of the light signal (16) and reception of the light signal (22) remitted or reflected at the object (20) and are collected in at least one histogram in a memory (34) configured as a histogram memory, and at least two distance values are determined from the individual light times of flight of at least two groups of light time of flight measuring units (30),
**characterized in that** the memory (34) is a single non-partitioned memory with uniform addressing over the entire memory (34), **in that** individual light times of flight are stored by a readdressing unit (36) to specific addresses (34a-d) of the same uniform memory (34) depending on the assignment of a light time of flight measuring unit (30) to a group, the group being encoded in at least one address bit of an address and a bin of a histogram being encoded in the remaining address bits, thus addresses are interpreted as two sub-blocks, with a first sub-block for association with a group and a second sub-block for a bin, and **in that**, when distance values are determined, the stored individual light times of flight are assigned to a group and thus to a distance value by means of the address, the number of groups being changed in order to adapt to the requirements of an application, and the readdressing unit (36) ensuring that the individual light times of flight are stored at addresses of the memory (34) in accordance with the new number of groups, from which the new group assignment of the light time of flight measuring units (30) can be reconstructed.

## Revendications

1. Capteur optoélectronique (10) pour mesurer la distance d'un objet (20) dans une zone de détection (18) par un procédé de temps de propagation de la lumière, le capteur (10) comprenant un émetteur de lumière (12) pour émettre un signal lumineux (16) dans la zone de détection (18), un récepteur de lumière (26) avec une première pluralité d'éléments de réception de lumière (28) pour détecter la lumière de réception (22) provenant de la zone de détection (18), une deuxième pluralité d'unités de mesure du temps de propagation de la lumière (30) pour déterminer des temps de propagation de lumière individuels respectifs à partir d'un temps de propagation de la lumière entre l'émission du signal lumineux (16) et la réception du signal lumineux (22) renvoyé ou réfléchi par l'objet (20), une mémoire (34) réalisée sous forme de mémoire d'histogramme pour collecter des temps de propagation de lumière individuels dans au moins un histogramme, ainsi qu'une unité de commande et d'évaluation (38) réalisée pour déterminer une valeur de distance par évaluation des temps de propagation de lumière individuels collectés, au moins deux valeurs de distance pouvant également être déterminées à partir des temps de propagation de lumière individuels d'au moins deux groupes d'unités de mesure du temps de propagation de lumière (30),
**caractérisé en ce que**
la mémoire (34) est une mémoire unique non partitionnée avec un adressage uniforme sur l'ensemble de la mémoire (34), et **en ce que** le capteur (10) comprend une unité de ré-adressage (36) réalisée pour coder le groupe dans au moins un bit d'une adresse et pour coder un bin d'un histogramme dans les autres bits d'adresse, afin d'interpréter ainsi des adresses comme deux sous-blocs, avec un premier sous-bloc pour l'appartenance à un groupe et un deuxième sous-bloc pour un bin, afin d'écrire ainsi des temps de propagation de lumière individuels à des adresses déterminées (34a-d) de la même mémoire uniforme (34), selon l'affectation d'une unité de mesure du temps de propagation de lumière (30) à un groupe, de sorte que l'unité de commande et d'évaluation (38) peut affecter les temps de propagation de lumière individuels mémorisés à un groupe et donc à une valeur de distance par le biais de l'adresse, l'unité de commande et d'évaluation (38) étant réalisée pour modifier le nombre de groupes, et l'unité de ré-adressage (36) assurant que les temps de propagation de lumière individuels sont stockés aux adresses de la mémoire en fonction du nouveau nombre de groupes, à partir duquel la nouvelle appartenance au groupe des unités de mesure du temps de propagation de lumière (30) peut être reconstruite.

2. Capteur (10) selon la revendication 1,
comprenant une unité de sélection (32) réalisée pour relier de manière variable des unités de mesure du temps de propagation de lumière (30) à des éléments de réception de lumière (28).

3. Capteur (10) selon l'une des revendications précédentes,
dans lequel la mémoire (34) est réalisée de telle sorte qu'une fonction discrète peut y être stockée dans des cellules de mémoire avec des adresses successives et que des temps de propagation de lumière individuels y sont ainsi stockés et appelés, en particulier, les adresses des cellules de mémoire correspondent à la plage de définition, et les valeurs de fonction correspondantes sont stockées dans les cellules de mémoire.

4. Capteur (10) selon l'une des revendications précédentes,
dans lequel le bit d'adresse est le bit de poids fort ou les bits d'adresse sont les bits de poids fort.

5. Capteur (10) selon l'une des revendications précédentes,
dans lequel la mémoire d'histogramme comprend autant de cellules de mémoire que de bins d'un histogramme pour un seul groupe.

6. Capteur (10) selon l'une des revendications précédentes,
dans lequel l'unité de ré-adressage (36) est réalisée pour coder le groupe dans le bit de poids fort ou dans les bits de poids fort, et pour coder un bin d'un histogramme dans les autres bits des adresses.

7. Capteur (10) selon l'une des revendications précédentes,
dans lequel les éléments de réception de lumière (28) comprennent chacun une photodiode à avalanche qui est polarisée avec une tension de polarisation supérieure à une tension de claquage et qui fonctionne donc dans un mode Geiger, et/ou les unités de mesure du temps de propagation de lumière (30) comprennent un convertisseur temps-numérique (TDC).

8. Procédé pour mesurer la distance d'un objet (20) dans une zone de détection (18) par un procédé de temps de propagation de la lumière,
dans lequel un signal lumineux est émis dans la zone de détection (18) et le signal lumineux (22) réfléchi ou renvoyé dans la zone de détection (18) est détecté par un récepteur de lumière (26) avec une première pluralité d'éléments de réception de lumière (28), des temps de propagation de lumière individuels respectifs sont mesurés avec une deuxième pluralité d'unités de mesure du temps de propagation de lumière (30) à partir d'un temps de propagation de lumière entre l'émission du signal lumineux (16) et la réception du signal lumineux (22) renvoyé ou réfléchi par l'objet (20), et sont collectés en au moins un histogramme dans une mémoire (34) réalisée sous forme de mémoire d'histogramme, et au moins deux valeurs de distance sont déterminées à partir des temps de propagation de lumière individuels d'au moins deux groupes d'unités de mesure du temps de propagation de lumière (30),
**caractérisé en ce que**
la mémoire (34) est une mémoire unique non partitionnée avec un adressage uniforme sur l'ensemble de la mémoire (34), des temps de propagation de lumière individuels sont écrits, selon l'affectation d'une unité de mesure du temps de propagation de lumière (30) à un groupe, à des adresses déterminées (34a-d) de la même mémoire uniforme (34), et le groupe est codé dans au moins un bit d'une adresse, et un bin d'un histogramme est codé dans les autres bits d'adresse, des adresses étant interprétées comme deux sous-blocs, avec un premier sous-bloc pour l'appartenance à un groupe et un deuxième sous-bloc pour un bin, et **en ce que** lors de la détermination des valeurs de distance, les temps de propagation de lumière individuels mémorisés sont affectés à un groupe et donc à une valeur de distance par le biais de l'adresse, le nombre de groupes étant modifié pour s'adapter aux besoins d'une application, et l'unité de ré-adressage (36) assurant que les temps de propagation de lumière individuels sont stockés aux adresses de la mémoire (34) en fonction du nouveau nombre de groupes, à partir duquel la nouvelle appartenance au groupe des unités de mesure du temps de propagation de lumière (30) peut être reconstruite.
